# EUROPÄISCHE PATENTANMELDUNG

(11) **EP 1 450 054 A1**
(43) Veröffentlichungstag der Anmeldung: **25.08.2004**
(21) Anmeldenummer: 04003325.0
(22) Anmeldetag: 14.02.2004
(51) Int. Cl.: F16B 25/10, F16B 35/04, F16B 25/00

(54) **Selbstbohrende Schraube**

(30) Priorität: 20.02.2003 DE 10308470
(71) Anmelder: Adolf Würth GmbH & Co. KG, 74653 Künzelsau (DE)
(72) Erfinder: Wunderlich, Andreas, 74635 Kupferzell (DE); Humm, Siegfried, 74214 Westernhausen (DE)
(74) Vertreter: Patentanwälte Ruff, Wilhelm, Beier, Dauster & Partner

(57) **Zusammenfassung**

Eine selbstbohrende Schraube enthält einen mit einem Gewinde versehenden Schraubenschaft aus Einsatzstahl. An das vordere Ende des Schraubenschafts ist eine Bohrspitze aus HSS angeschweißt, die die Form eines Spiralbohrers aufweist.

## Beschreibung

Die Erfindung geht aus von einer selbstbohrenden Schraube, die eine Bohrspitze aufweist, mit der sie sich ihr Loch im Metall selbst bohrt.

Der Vorschub von Bohrschrauben wird durch die Bohrfähigkeit der Bohrspitze bestimmt. Wenn der Schaft ein Gewinde aufweist, und dieses Gewinde in Eingriff mit einem zu befestigenden Gegenstand gerät, so wird dieser Gegenstand abgehoben, da der Vorschub der Schraube beim Bohren kleiner ist als es der Steigung des Gewindes entspricht.

Ein Anwendungsfall für selbstbohrende Schrauben ist die Befestigung von aus Holz oder holzähnlichem Material bestehenden Platten an einer metallischen Unterkonstruktion. Damit der gerade beschriebene Zwangsvorschub nicht auftritt, sind bereits sogenannte Flügelbohrschrauben bekannt, bei denen zwischen der Bohrspitze und dem Gewinde des Schafts zwei radial vorspringende Flügel ausgebildet sind. Diese vergrößern in dem zu befestigenden weicheren Material die Bohrung, so dass das Gewinde der Schraube nicht in Berührung mit dem Holz gelangt. Sobald die Flügel an das Metall stoßen, werden sie abgeschert.

Bei dem Bohren solcher Materialien entsteht vor allem Wärme, weil die Metallspäne, die warm sind, nicht oder nur schlecht aus dem Bohrloch herausgefördert werden können. Hinzu kommt, dass Holz oder holzähnliches Material ein schlechter Wärmeleiter ist. Die Wärme bleibt daher in der Bohrschraube.

Die im Stand der Technik bekannten Bohrschrauben bestehen aus gehärtetem Einsatzstahl, der bei einer Temperatur beispielsweise von 350° angelassen wurde. Sobald die Bohrspitze beim Bohren diese Temperatur überschreitet, wird die Bohrspitze weicher. Die Schraube bohrt dann nicht mehr und glüht aus. Um dies zu verhindern, kann nur mit einer relativ niedrigen Drehzahl gebohrt werden. Dies bedeutet aber einen erhöhten zeitlichen Aufwand für die Durchführung der Montage.

Die bekannten Flügelbohrschrauben bestehen aus einem einstückigen Teil, bei dem die Spitze durch Kaltverformen zu einer Bohrspitze geformt ist. Es sind auch aus zwei Teilen bestehende Bohrschrauben bekannt, bei denen die Bohrspitze aus einem nichtrostenden martensitischen Edelstahl hergestellt ist ( DE 100 33 471). Diese haben aber den gleichen Nachteil.

Der Erfindung liegt die Aufgabe zugrunde, eine Bohrschraube so auszugestalten, dass sie auch in ungünstigen Situationen eine verringerte Montagezeit ermöglicht.

Zur Lösung dieser Aufgabe schlägt die Erfindung eine selbstbohrende Schraube mit den im Anspruch 1 genannten Merkmalen vor. Weiterbildungen der Erfindung sind Gegenstand von Unteransprüchen.

Die vorzugsweise als relativ kurzer Spiralbohrer ausgebildete Bohrspitze besteht aus Hochleistungsschnellschnittstahl. Dieser Stahl hat eine Anlasstemperatur von ca. 560° Celsius. Erst bei dieser Temperatur wird er weicher. Nach dem Härten liegt die Härte dieses Bohrabschnitts bei ca. 850-900 HV und ist über den ganzen Querschnitt gleich.

Der etwas erhöhte Aufwand bei der Herstellung der Schraube wird durch die Vorteile bei der Verwendung der Schraube mehr als ausgeglichen.

Auch bei der von der Erfindung vorgeschlagenen Schraube kann mit Vorteil der Schraubenschaft aus Einsatzstahl bestehen, so dass die an sich vorhandenen Vorteile von Einsatzstahl erhalten bleiben.

Die Verbindung zwischen der Bohrspitze und dem Schraubenschaft kann durch eine Verschweißung erfolgen, insbesondere durch eine Reibschweißung.

Wenn die von der Erfindung vorgeschlagene selbstbohrende Schraube zur Befestigung von Holz oder holzähnlichem Material an metallischem Untergrund verwendet werden soll, kann sie erfindungsgemäß zwischen dem Gewinde und der Bohrspitze mindestens einen radial abragenden Flügel aufweisen, der dann das Bohrloch in dem Holz oder in dem holzähnlichen Material vergrößert.

Durch die Verwendung eines anderen Materials lässt sich wegen der größeren Wärmebelastbarkeit eine höhere Drehzahl verwenden. Zusätzlich tritt der Effekt auf, dass aufgrund der Schneidengeometrie eines Spiralbohrers die Schraube auch schneller durch Schichtholz gebohrt werden kann als dies bei den im Stand der Technik bekannten Flügelbohrschrauben der Fall ist.

Aufgrund dieser Kombination von verschiedenen Einschlüssen lässt sich die Montagezeit zum Teil um einen Faktor zwischen 5 und 10 verkürzen.

Weitere Merkmale, Einzelheiten und Vorzüge der Erfindung ergeben sich aus der folgenden Beschreibung einer bevorzugten Ausführungsform der Erfindung, den Patentansprüchen und der Zusammenfassung, deren Wortlaut durch Bezugnahme zum Inhalt der Beschreibung gemacht wird, sowie anhand de Zeichnungen. Hierbei zeigen:
- Figur 1: eine Seitenansicht einer Schraube nach der Erfindung;
- Figur 2: eine abgebrochene Darstellung der Schraube nach dem Einschraubvorgang.

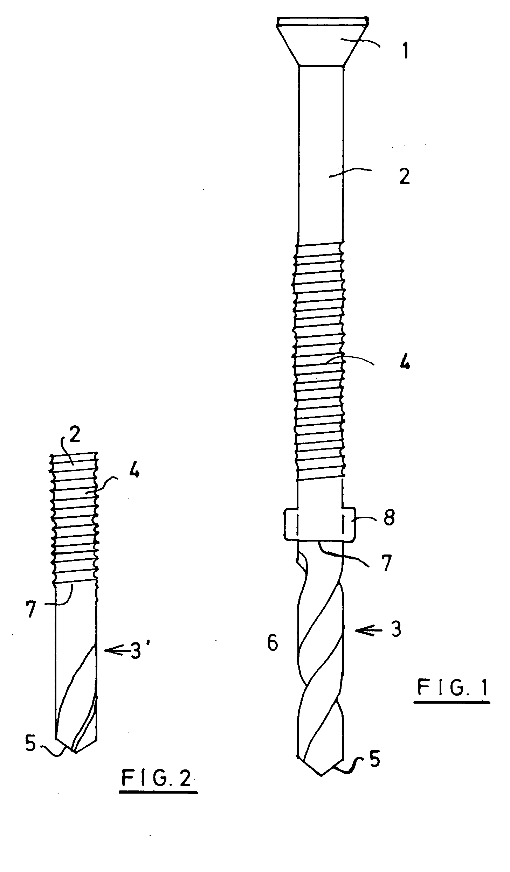

Figur 1 zeigt in Seitenansicht eine Flügelbohrschraube mit einem Schraubenkopf 1, einem Schraubenschaft 2 und einer Bohrspitze 3. Auf dem Schraubenschaft 2 ist über einen Teil von dessen Länge ein Gewinde 4 aufgewalzt.

Die Schraubenspitze 3 weist die Form eines kurzen Spiralbohrers auf, mit zwei Schneidkanten 5 und die Bohrspäne wegbefördernden Nuten 6.

Die Bohrspitze 3 ist an den Schraubenschaft 2 angeschweißt und zwar vorzugsweise durch eine Reibschweißung. Unmittelbar an diese Verbindungsstelle 7 schließt sich ein Bereich des Schraubenschafts 2 an, in dem zwei radial abragende Flügel 8 vorgesehen sind. Diese Flügel 8 weisen eine radiale Erstreckung auf, die etwas größer ist als das Gewinde 4.

Der das Gewinde 4 aufweisende Schraubenschaft 2 besteht aus Einsatzstahl, während die die Form eines Spiralbohrers aufweisende Bohrspitze 3 aus gehärtetem HSS besteht.

Beim Einbohren zunächst durch eine Holzschicht erzeugt die Bohrspitze 3 aufgrund der Schneidengeometrie ein Bohrloch, das dann durch die Flügel 8 erweitert wird. Dadurch gerät das Gewinde 4 nicht in Eingriff mit dem Holz oder dem Holzmaterial.

Sobald die Bohrspitze 3 das unter der Holzschicht liegende Metall erreicht, bohrt sie dort ein Loch. Dabei ist der Vorschub jetzt langsamer, da das Bohren des Lochs im Metall langsamer von sich geht. Sobald die Verbindungsstelle 7 zwischen der Bohrspitze 3 und dem Schaft 2 die Oberfläche des Metalls erreicht, werden die Flügel 8 abgeschert. Anschließend bildet sich das Gewinde 4 in dem Loch im Metallträger ein Gewinde, das dann zum Festschrauben der Schraube dient. Nach dem Abscheren der Flügel 8 sieht die Verbindungsstelle zwischen dem Schraubenschaft 2 und der Bohrspitze 3 etwa so aus, wie dies in Figur 2 dargestellt ist. In Figur 2 ist eine kürzere Schraubenspitze 3' dargestellt.

## Patentansprüche

1. Selbstbohrende Schraube, mit
1.1 einem Schraubenkopf (1),
1.2 einem ein Gewinde (4) aufweisenden Schraubenschacht (2), sowie mit
1.3 einer Bohrspitze (3), die
1.3.1 als Bohrer, insbesondere als Spiralbohrer ausgebildet ist,
1.3.2 aus HSS besteht und
1.3.3 mit dem Schraubenschaft (2) verbunden ist.

2. Schraube nach Anspruch 1, bei der der Schraubenschaft (2) aus Einsatzstahl besteht.

3. Schraube nach Anspruch 1 oder 2, bei der die Bohrspitze (3) mit dem Schaft verschweißt ist, insbesondere durch Reibschweißen.

4. Schraube nach einem der vorhergehenden Ansprüche, bei der der Schraubenschaft (2) zwischen dem Gewinde (4) und der Bohrspitze (3) mindestens einen radial abragenden Flügel (8) aufweist.
